Europäisches Patentamt

European Patent Office

Office européen des brevets

(11) Veröffentlichungsnummer: **0 410 381 A1**

## (12) EUROPÄISCHE PATENTANMELDUNG

(21) Anmeldenummer: **90114165.5**

(22) Anmeldetag: **24.07.90**

(51) Int. Cl.⁵: **B67D 3/00, A23G 1/00**

(30) Priorität: **25.07.89 DE 3924561**
**03.02.90 DE 4003128**

(43) Veröffentlichungstag der Anmeldung:
**30.01.91 Patentblatt 91/05**

(84) Benannte Vertragsstaaten:
**AT BE CH DE DK ES FR GB GR IT LI LU NL SE**

(71) Anmelder: **STOLLWERCK AKTIENGESELLSCHAFT**
**Industriestrasse 27-31**
**D-5000 Köln 90(DE)**

(72) Erfinder: **Gredig, Egon**
**Oberstrasse 109**
**D-5000 Köln 90(DE)**

(74) Vertreter: **Freischem, Werner, Dipl.-Ing.**
**An Gross St. Martin 2**
**D-5000 Köln 1(DE)**

(54) **Vorrichtung zur Präsentation und Darbietung von Schokolade.**

(57) Vorrichtung zur Präsentation und Darbietung von Schokolade, die als Springbrunnen (1) ausgebildet ist
- mit einem Auffangbecken (2), das mittels eines von einem flüssigen Wärmeträger, vorzugsweise Öl oder Wasser, durchströmten Heizmantels (7) beheizbar ist und dessen oberer Rand sich in Greifhöhe (0,8 - 1,2 m) befindet,
- mit mindestens einem im Auffangbecken (2) angeordneten Düsenkopf (3), der an einer von einer Pumpe (4) kommenden Druckleitung (5) angeschlossen ist und dessen Düsen (13) im Querschnitt der Viskosität der Schokoladenmasse angepaßt ist und
- mit einer vom Auffangbecken (2) zur Pumpe (4) führenden Saugleitung (6).

FIG. 1

## VORRICHTUNG ZUR PRÄSENTATION UND DARBIETUNG VON SCHOKOLADE

Die Erfindung bezieht sich auf eine Vorrichtung zur Präsentation und Darbietung von Schokolade.

Der Erfindung liegt die Aufgabe zugrunde, eine Vorrichtung zu schaffen, mit der Schokolade in attraktiver Weise präsentiert und zum Verzehr dargeboten werden kann.

Diese Aufgabe wird erfindungsgemäß dadurch gelöst, daß die Vorrichtung als Springbrunnen ausgebildet ist mit einem Auffangbecken, dessen oberer Rand sich in Greifhöhe befindet, mit mindestens einem im Auffangbecken angeordneten Düsenkopf, der an einer von einer Pumpe kommenden Druckleitung angeschlossen ist und mit einer vom Auffangbecken zur Pumpe führenden Saugleitung und

- daß zum Betrieb mit einer flüssigen Schokoladenmasse das Auffangbecken mittels eines von einem flüssigen Wärmeträger, vorzugsweise Öl oder Wasser, durchströmten Heizmantels beheizbar ist und der Querschnitt der Düsen des Düsenkopfes der Viskosität der Schokoladenmasse angepaßt ist.

Die Schokoladenmasse oder Kuvertüre wird im Auffangbecken auf eine Temperatur von 40 bis 45° C gebracht und gehalten, so daß sie von der Pumpe abgesaugt und unter Druck dem Düsenkopf zugeführt wird und als Springbrunnen in das Auffangbecken zurückfällt. Es hat sich gezeigt, daß die Viskosität der Schokoladenmasse dann besonders günstig ist, wenn der Gehalt an Fett, insbesondere Kakaobutter und Milchfett bei mindestens 32% liegt. Der Schokoladen-Springbrunnen ist wegen seines infolge der hohen Viskosität und Undurchsichtigkeit der Schokoladenmasse ungewöhnlichen Erscheinungsbildes optisch sehr eindrucksvoll. Die sprudelnde warme Schokoladen masse gibt an die Umgebungsluft in hoher Konzentration Duftstoffe ab. Der Betrachter wird dadurch über Augen und Nase dazu verführt, die im Auffangbecken befindliche Schokolade zu kosten. Durch Eintauchen einer Waffel oder eines anderen relativ festen Gebäcks kann Schokoladenmasse aus dem Auffangbecken entnommen werden. Der sich beim Eintauchen des Gebäcks bildende Schokoladenüberzug verfestigt sich nach dem Herausnehmen des Probestückes aus dem Schokoladenbad sehr schnell. Der noch warme Schokoladenüberzug vermittelt ein besonders intensives Geschmackserlebnis.

Die Schokoladenmasse wird über einen großflächigen und von einem flüssigen Wärmeträger durchströmten Heizmantel auf einer Temperatur von 40 bis 45° C gehalten. Die Temperatur des Wärmeträgers kann unter 50° C gehalten werden, so daß sichergestellt ist, daß die Schokoladenmasse auch nicht lokal überhitzt wird, so daß sie lange Zeit ohne Qualitätsverlust im Umlauf gehalten werden kann. Je nach Entnahme wird Kuvertüre in das Auffangbecken nachgefüllt.

Das Auffangbecken hat vorteilhafterweise im wesentlichen die Form einer Halbkugel und der Heizmantel umschließt die Wand des Auffangbeckens über mindestens die untere Hälfte von dessen Höhe. Bei einem derartigen Auffangbecken wird durch ständiges Aufsteigen warmer Schokolade eine sehr gute Durchmischung der Schokoladenmasse erreicht.

Diese erfindungsgemäße Vorrichtung ist für den Einsatz bei Werbeveranstaltungen in Fachabteilungen großer Kaufhäuser, in Feinkost-Fachgeschäften, bei Ausstellungen und Messen oder dergleichen geeignet. Auch eignet sich dieses Gerät als Blickfang für ein Nachtisch-Buffet im Rahmen größerer Festlichkeiten.

Wie die Merkmale der Unteransprüche zeigen, kann dieser Schokoladen-Springbrunnen auch als Ausgabeautomat flüssiger Schokoladenmasse weiterentwickelt werden.

In der folgenden Beschreibung werden Ausführungsbeispiele der erfindungsgemäßen Vorrichtung unter Bezugnahme auf die Zeichnungen näher erläutert. Die Zeichnungen zeigen in

Fig. 1 eine Ansicht der erfindungsgemäßen Vorrichtung, teilweise geschnitten,

Fig. 2 eine Schnittansicht des Düsenkopfes,

Fig. 3 eine Ansicht einer als Ausgabeautomat ausgebildeten Vorrichtung nach der Erfindung.

Fig. 4 eine Ansicht einer weiteren Ausführungsform.

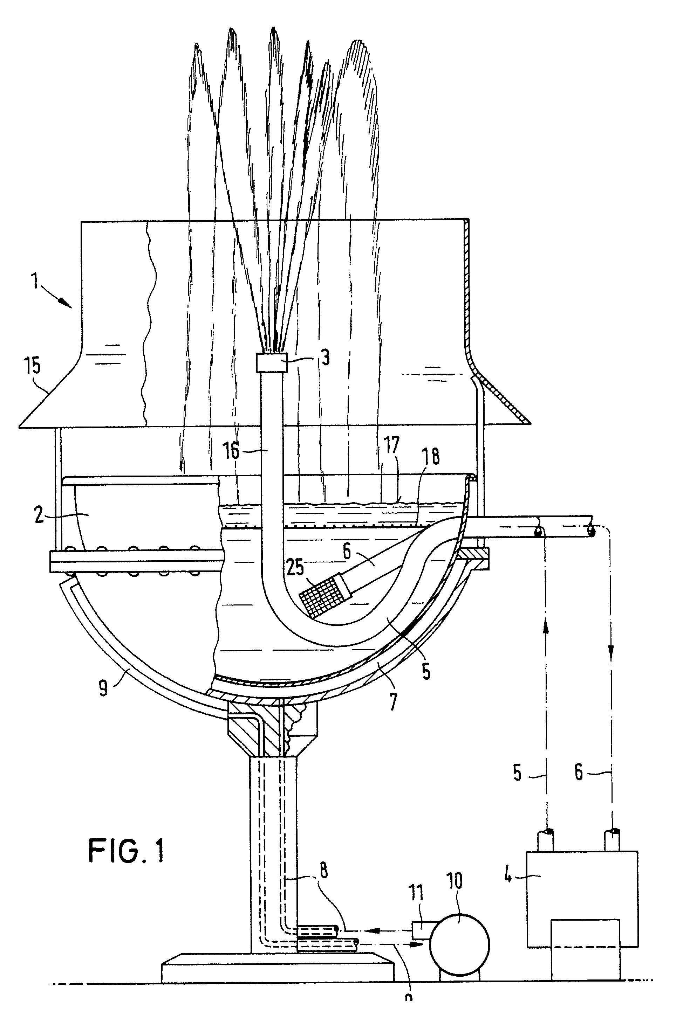

Die in Fig. 1 dargestellte Vorrichtung zur Präsentation und Darbietung von Schokolade ist als Springbrunnen ausgebildet mit einem Auffangbecken 2 und einem Düsenkopf 3. Der Düsenkopf 3 ist am Ende einer Druckleitung 5 angeordnet, die als Düsenstock 16 über das Auffangbecken 2 herausragt. Die Druckleitung 5 ist an einer Pumpe 4,z.B. einer Zahnradpumpe, angeschlossen, welche über die Saugleitung 6 Schokoladenmasse aus dem Auffangbecken 2 absaugt und unter Druck dem Düsenkopf 3 zuführt. Das Auffangbecken 2 ist von einem Heizmantel 7 beheizbar, der von einem flüssigen Wärmeträger durchflossen ist. Der flüssige Wärmeträger, vorzugsweise Öl oder Wasser, wird in einer Heizkammer 10, beispielsweise auf 50° C,erwärmt und über einen Thermostaten 11 und eine Zulaufleitung 8 dem Heizmantel 7 zugeführt. Über eine Ablaufleitung 9 wird der flüssige Wärmeträger über eine nicht dargestellte Pumpe an die Heizkammer 10 zurückgeführt.

Das Auffangbecken weist im wesentlichen die Form einer Halbkugel auf und der Heizmantel 7 umschließt die Wand des Auffangbeckens 2 über mindestens die untere Hälfte von dessen Höhe. Das Auffangbecken 2 besteht aus einem gut wärmeleitenden Material, insbesondere aus Kupferblech.

Auch der Düsenstock 16 besteht vorteilhafterweise aus einem Material, das die Wärme gut leitet. Damit sich die Düsen im Düsenstock 3 nicht zusetzen, kann es vorteilhaft sein, den Düsenstock 16 mit einem Isoliermantel zu umgeben oder aber den Düsenstock 16 und/oder den Düsenkopf 3 beheizbar auszu bilden. Im Abstand oberhalb des Auffangbeckens 2 ist ein ringartiger Schirm 15 aus glasklarem Werkstoff angebracht, dessen äußerer Durchmesser größer ist und dessen innerer Durchmesser kleiner ist als der des Auffangbeckens 2. Dieser Schirm schützt die im Auffangbecken befindliche Schokoladenmasse gegen Verunreinigungen von außen und erlaubt dennoch ein unbehindertes Eintauchen von Waffeln oder dergleichen in die flüssige Schokoladenmasse. Im Abstand unter dem Spiegel 17 des Schokoladenbades kann ein Rost oder Sieb 18 angebracht sein, das über den Spiegel 17 anhebbar ist. Dieser Rost oder dieses Sieb 18 verhindert, daß abgebrochene Gebäck- oder Waffelteile in den Schokoladenkreislauf gelangen. In zeitlichen Abständen kann dieses Sieb oder dieser Rost angehoben werden, so daß die darauf liegenden Gebäckteile oder dergleichen entfernt werden können.

Bei der Ausführungsform nach Fig. 1 ist an der Saugöffnung der Saugleitung 6 ein Siebkorb 25 angebracht. Dieser ist aber entbehrlich, wenn im Auffangbecken 2 der Rost 18 vorgesehen ist.

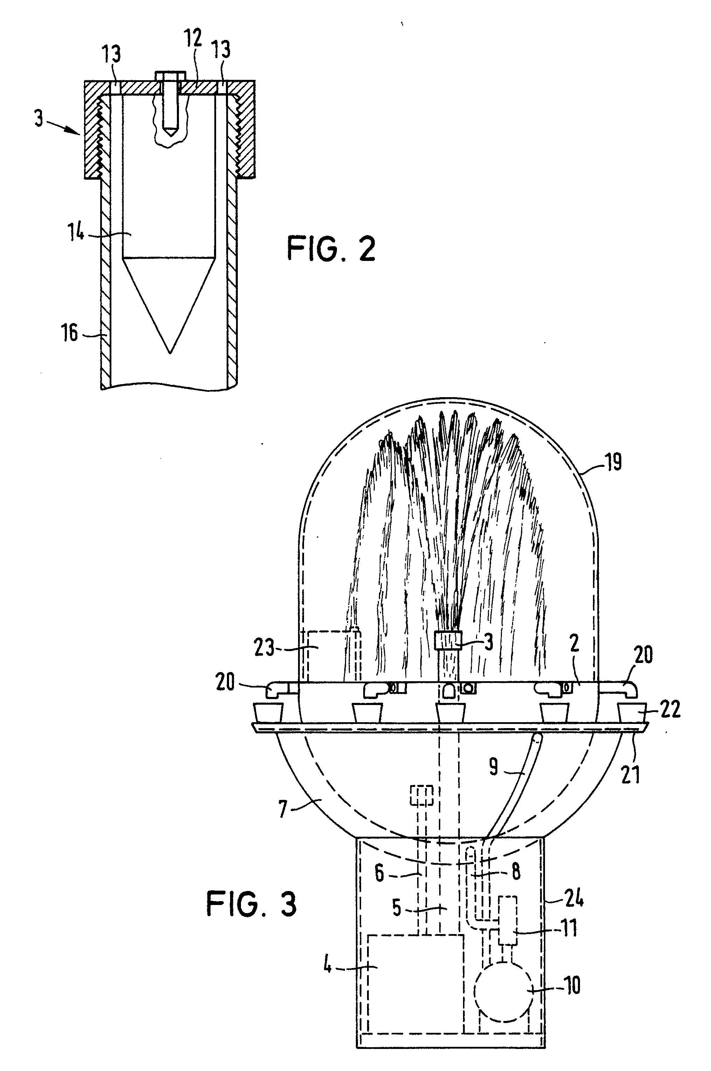

Die Fig. 2 zeigt einen Querschnitt des Düsenkopfes 3. Der Düsenkopf 3 ist als eine auf das obere Ende des Düsenstocks 16 aufschraubbare Kappe ausgebildet, in deren Deckel 12 ringsum zahlreiche Bohrungen als Düsen 13 angeordnet sind. Es können beispielsweise 14 oder 20 Bohrungen vorgesehen sein. Am Deckel 12 ist zentral ein Verteilkonus 4 befestigt, der die Schokoladenmasse in den Ringraum zwischen dem zylindrischen Teil des Verteilkonus und der Rohrwandung des Düsenstocks 16 hin abdrängt.

Damit die Strahlen des Springbrunnens nach oben und außen konisch ansteigen, können die Achsen der Bohrungen 13 entsprechend konisch ausgerichtet sein. Aber auch dann, wenn die Achsen, wie in dem Ausführungsbeispiel dargestellt, parallel zueinander verlaufen, wird ein konisches Aufsteigen der Strahlen des Springbrunnens erreicht, weil die Reibung der Schokoladenmasse an der Wand des Düsenstockes 16 größer ist als am Verteilkonus 14, so daß die Schokoladenmasse am Konus 14 etwas schneller fließt als an der Wandung des Düsenstockes 16.

Bei dem Ausführungsbeispiel nach Fig. 3 ist die Vorrichtung als Schokoladen-Ausgabeautomat weiterentwickelt. Bei diesem Ausführungsbeispiel ist das Auffangbecken 2 von einer durchsichtigen Glocke 19 überwölbt. Diese Glocke 19 ist mit mindestens einer verschließbaren Eingriffsöffnung 23 versehen, damit Kuvertüre in das Becken 2 nachgefüllt werden kann. An der Außenseite des Auffangbeckens 2 in Nähe des oberen Randes sind absperrbare Schokoladenauslässe 20 angeordnet, die über einen beweglichen Verschlußkörper geöffnet und verschlossen werden können. Diese Schokoladenauslässe sind zweckmäßigerweise im Nebenschluß (Bypass) an der Druckleitung 5 angeschlossen. Über einen nicht dargestellten Handhebel oder auch über einen Münzautomaten können die Schokoladenauslässe 20 zur Ausgabe einer bestimmten Portion warmer Schokolade geöffnet werden. Im Abstand unterhalb dieser Schokoladenauslässe 20 ist eine Abstellfläche 21 angeordnet, auf welche Becher oder Näpfe 22 abgestellt werden können.

Ein derartiges Schokoladen-Ausgabegerät ist beispielsweise für Eissalons geeignet, um warme Schokolade über eine Portion Eis zu geben.

Die Schokoladenauslässe 20 können aber auch so am Münzautomaten angebracht sein, daß nach Einwurf eines Geldstücks eine oder mehrere Waffeln oder andere Gebäckstücke ausgegeben werden und gleichzeitig ein Schokoladenauslaß 20 geöffnet wird, bis eine vorbestimmte Schokoladenmenge ausgegeben ist. Das Schließen kann zeit- oder auch gewichtsabhängig gesteuert werden.

Bei dem Ausführungsbeispiel nach Fig. 3 sind die Pumpe 4 für den Umlauf der Schokoladenmasse sowie die Heizkammer 10 zum Beheizen des Heizmantels 7 innerhalb eines gehäuseartig aus gebildeten Ständers 24 untergebracht. Wenn das Auffangbecken 2 durch eine dichtschließende Glocke 19 abgedeckt ist, ist es vorteilhaft, wenn diese Glocke mit Be- und Entlüftungsöffnungen versehen ist, damit die Schokoladen-Duftstoffe nach außen dringen. In der Glocke kann ggf. auch eine künstliche Atmosphäre geschaffen werden, zum Beispiel Stickstoff eingefüllt werden, die bewirkt, daß die im Umlauf befindliche Schokoladenmasse eine sehr lange Zeit intakt bleibt.

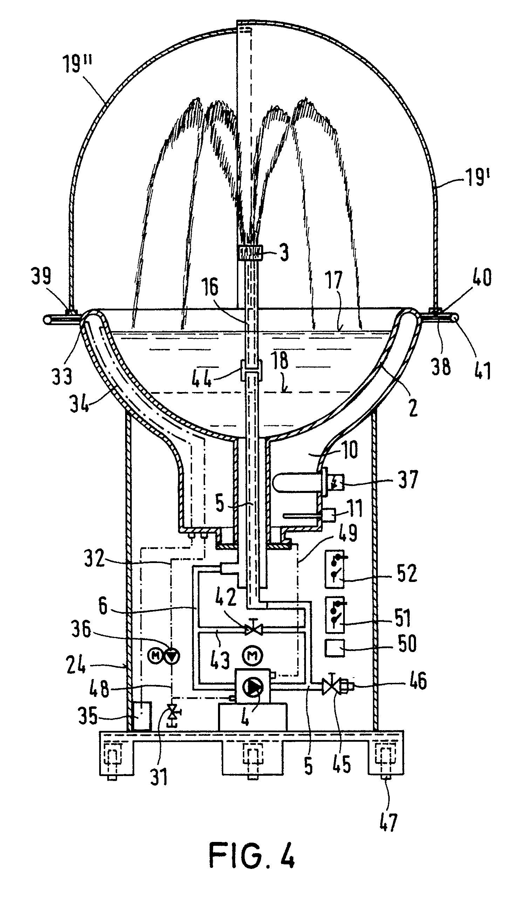

Der Schokoladenbrunnen gemäß Fig. 4 besteht aus
- einer doppelwandigen, beheizbaren Brunnenschale 2, die von einem zylindrischen Ständer 24 getragen wird, in dem die Betriebseinrichtungen untergebracht sind;
- einem Schokoladenmassenfördersystem mit einer beheizbaren Schokoladen-Förderpumpe 4, einer Saugleitung 6 und einer Druckleitung 5 mit Düsenrohr 16 und Düsenkopf 3. Über der Pumpe 4 ist eine regulierbare Bypaßleitung 43 zur Steuerung der Schokoladenfontäne angebracht;
- einem Warmwasserheizungssystem, mit einer Heizkammer 10, dem Doppelmantel der Brunnenschale 2, einer Elektroheizung 37, einem einstellbaren Temperaturbegrenzer 11, einer Umwälzpumpe 36, einem Einfüllventil 31 für Frischwasser, einem Überlauf 33, der auch zur drucklosen Einfüllung genutzt werden kann, sowie Verbindungsleitungen 48,49 zwishen Umwälzpumpe 36 und Schokoladenpumpe 4 und zwischen Schokoladenpumpe 4 und Heizkammer 10;
- einem steckerfertigen, elektrischen Anschluß 50, einem Schalter 51 für das Heizungssystem und einem Schalter 52 für die Schokoladenförderpumpe.

Zum Betreiben des Schokoladenbrunnens ist das Heizungssystem mit Wasser zu befüllen und dieses auf eine Temperatur von ca. 50°C aufzuheizen. Die Temperaturregelung erfolgt über den Thermostaten 11. Das Schokoladebecken 2 kann außer mit flüssiger Schokolade auch mit ca. 50 kg Blockschokolade in einzelnen Blöcken bis zu 2,0 kg gefüllt werden. Für den Springbrunnenbetrieb muß die Schokoladenmasse auf eine Temperatur von ca. 45°C aufgeheizt sein. Auf dem Schokoladenbrunnen ist eine zweiteilige Piexiglashaube 19,19' aufgesetzt, die geöffnet werden kann.

Wenn die Schokoladenmasse auf ca. 45°C erwärmt ist, kann die Fontäne in Betrieb genommen werden.

Dazu ist das Bypaß-Ventil 42 in der Kurzschlußleitung 43 zu öffnen und die Schokoladenpumpe 4 einzuschalten.

Durch langsames Schließen des Bypaß-Ventils 42 steigt der Druck im Düsenrohr 16, bis die flüssige Schokolade als Strahlen aus den Düsen des Düsenkopfes 3 austritt.

Der Düsenstock 6 ist über ein Gewinde oder einen Bajonettverschluß 44 leicht lösbar mit der Druckleitung 5 verbunden. Damit die Schokoladenmasse ihre Temperatur auch ohne Springbrunnenbetrieb beibehält, kann für den Nachtbetrieb der Düsenstock 6 abgenommen werden, so daß die von der Pumpe 4 geförderte Schokolade unmittelbar in das Auffangbecken 2 gefördert wird.

Bezugzeichenliste

1 Springbrunnen
2 Auffangbecken, Schale
3 Düsenkopf
4 Pumpe
5 Druckleitung
6 Saugleitung
7 Heizmantel
8 Zulaufleitung
9 Ablaufleitung
10 Heizkammer
11 Thermostat

12 Deckel
13 Düsen
14 Verteilkonus
15 Schirm
16 Düsenstock, Düsenrohr
17 Schokoladenspiegel
18 Rost oder Sieb
19 Glocke
20 Schokoladenauslaß
21 Abstellfläche
22 Napf
23 Eingriffsöffnung
24 Ständer
25 Siebkorb
30 Wasserspiegel
31 Einfüllventil
32 Füll-Leitung
33 Überlauf
34 Überlaufleitung
35 Auffangbehälter
36 Umwälzpumpe
37 Heizkörper
38 Steg
39 Laufring
40 Kugel
41 Handlauf
42 Bypaß- oder Kurzschluß-Ventil
43 Bypaß- oder Kurzschluß-Leitung
44 Schnellkupplung
45 Auslaßventil
46 Auslaß
47 Transportrollen
48 Verbindungsleitung
49 Verbindungsleitung
50 elektrischer Anschluß
51 Schalter für Heizung
52 Schalter für Schokoladen-Pumpe

Ansprüche

1. Vorrichtung zur Präsentation und Darbietung von Schokolade, dadurch gekennzeichnet,
- daß sie als Springbrunnen (1) ausgebildet ist mit einem Auffangbecken (2), dessen oberer Rand sich in Greifhöhe (0,8 - 1,2 m) befindet, mit mindestens einem im Auffangbecken (2) angeordneten Düsenkopf (3), der an einer von einer Pumpe (4) kommenden Druckleitung (5) angeschlossen ist und mit einer vom Auffangbecken (2) zur Pumpe (4) führenden Saugleitung (6) und
- daß zum Betrieb mit einer flüssigen Schokoladenmasse das Auffangbecken (2) mittels eines von einem flüssigen Wärmeträger, vorzugsweise Öl oder Wasser, durchströmten Heizmantels (7) beheizbar ist und der Querschnitt der Düsen (13) des Düsenkopfes (3) der Viskosität der Schokoladenmasse angepaßt ist.

2. Vorrichtung nach Anspruch 1, dadurch gekennzeichnet, daß das Auffangbecken (2) im wesentlichen die Form einer Halbkugel aufweist und der Heizmantel (7) die Wand des Auffangbeckens (2) über mindestens die untere Hälfte von desssen Höhe umschließt.

3. Vorrichtung nach Anspruch 1 oder 2, dadurch gekennzeichnet, daß das Auffangbecken (2) aus Kupferblech besteht.

4. Vorrichtung nach einem der Ansprüche 1 bis 3, dadurch gekennzeichnet, daß die Druckleitung (5) in der Mitte des Auffangbeckens (2) als Düsenstock (16) aus der Schokoladenmasse senkrecht herausragt, wobei die Länge des herausragenden Teils mindestens einem Drittel des Durchmessers des Auffangbeckens (2) entspricht.

5. Vorrichtung nach Anspruch 4, dadurch gekennzeichnet, daß der Düsenstock (16) mittels eines Heizmantels beheizbar ist.

6. Vorrichtung nach einem der Ansprüche 1 bis 5, dadurch gekennzeichnet, daß der Düsenkopf (3) von einer auf die Druckleitung (5) bzw. den Düsenstock (16) aufschraubbaren Kappe gebildet ist, in deren Deckel (12) am Umfang zahlreiche, z.B. vierzehn oder zwanzig Bohrungen als Düsen (13) angeordnet sind, deren Durchmesser 2 bis 3 mm, vorzugsweise 2,5 mm beträgt, und daß am Deckel (12) des Düsenkopfes (3) ein in die Druckleitung (5) bzw. den Düsenstock (16) ragender Verteilkonus (14) zentral angeordnet ist.

7. Vorrichtung nach einem der Ansprüche 1 bis 6, dadurch gekennzeichnet, daß im Auffangbecken (2) unterhalb des Schokoladenspiegels (17) ein Rost oder Sieb (18) angeordnet ist, der oder das über den Schokoladenspiegel (17) anhebbar ist.

8. Vorrichtung nach einem der Ansprüche 1 bis 7, dadurch gekennzeichnet, daß im Abstand oberhalb des Auffangbeckens (2) ein ringartiger Schirm (15) aus klar durchsichtigem Werkstoff angebracht ist, dessen äußerer Durchmesser größer ist und dessen innerer Durchmesser kleiner ist als der des Auffangbeckens (2).

9. Vorrichtung nach einem der Ansprüche 1 bis 7, dadurch gekennzeichnet, daß das Auffangbecken (2) von einer durchsichtigen Glocke (19) überwölbt ist.

10. Vorrichtung nach Anspruch 9, dadurch gekennzeichnet, daß die Glocke (19) mindestens eine verschließbare Eingriffsöffnung (23) aufweist.

11. Vorrichtung nach Anspruch 10, dadurch gekennzeichnet, daß die Glocke (19) im wesentlichen in ihrer Mitte vertikal geteilt ist und einen feststehenden Teil (19') und einen um die vertikale Achse des runden Auffangbeckens (2) drehbaren Teil (19") aufweist, wobei einer der beiden Teile größer ist als der andere und in Schließstellung die Ränder der Teile (19',19") einander überlappen.

12. Vorrichtung nach Anspruch 11, dadurch gekennzeichnet, daß der bewegliche Teil (19") der Glocke einen den Rand des Auffangbeckens (2) umgreifenden Laufring (39) aufweist, der auf Wälzkörpern (40) gelagert ist.

13. Vorrichtung nach Anspruch 11 oder 12, dadurch gekennzeichnet, daß das Auffangbecken (2) von einem kreisrunden Handlauf (41) und Abweisring umgeben ist, der über Stege (38) mit dem Beckenrand verbunden ist und auf diesen Stegen (38) die Glocke (19) abgestützt ist.

14. Vorrichtung nach Anspruch 9, dadurch gekennzeichnet, daß an der Außenseite des Auffangbeckens (2) mindestens ein absperrbarer Schokoladenauslaß (20) angeordnet ist, der im Nebenschluß (Bypaß) an der Druckleitung (5) angeschlossen ist.

15. Vorrichtung nach Anspruch 14, dadurch gekennzeichnet, daß der Schokoladenauslaß (20) über einen Münzautomaten steuerbar ist.

16. Vorrichtung nach Anspruch 11, dadurch gekennzeichnet, daß die Glocke (19) mit Be- und Entlüftungsöffnungen versehen ist.

17. Vorrichtung nach einem der Ansprüche 1 bis 16, dadurch gekennzeichnet, daß die absperrbaren Schokoladenauslässe (20) in Nähe des oberen Randes des Auffangbeckens (2) angeordnet sind und im Abstand unterhalb dieser Schokoladenauslässe (20) eine Abstellfläche (21) für Becher oder Näpfe (22) angeordnet ist.

18. Vorrichtung nach einem der Ansprüche 1 bis 17, dadurch gekennzeichnet, daß das Auffangbecken (2) auf einem gehäuseartig ausgebildeten zentralen Ständer (24) angeordnet ist und in diesem Ständer (24) die Pumpe (4) mit Antriebsaggregat sowie die Heizkammer (10) untergebracht sind.

19. Vorrichtung nach einem der Ansprüche 1 bis 18, dadurch gekennzeichnet, daß die Druckleitung (5) über eine absperrbare Kurzschlußleitung (43) mit der Saugleitung (6) verbunden ist.

20. Vorrichtung nach Anspruch 19, dadurch gekennzeichnet, daß in der Kurzschlußleitung (43) ein Durchlaß-Regelventil (42) angeordnet ist.

21. Vorrichtung nach einem der Ansprüche 1 bis 20, dadurch gekennzeichnet, daß der Düsenstock (16) unterhalb des Schokoladenspiegels (17) leicht lösbar mit der Druckleitung (5) verbunden ist.

FIG. 1

FIG. 2

FIG. 3

FIG. 4

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-8 909 022 (STOLLWERK)<br>* Seite 1, Zeile 1 - Seite 6, Zeile 9; Ansprüche 1-18; Abbildungen 1-3 *<br>--- | 1-21 | B 67 D 3/00<br>A 23 G 1/00 |
| Y | US-A-1 804 519 (H.C. SMITH et al.)<br>* Abbildung 1; Seite 1, Zeilen 1-15; Seite 2, Zeilen 80-92 *<br>--- | 1,2,4,9,10,16,18 | |
| Y | FR-A- 929 856 (S.E.M.)<br>* Abbildung 5, Zusammenfassung Absatz Punkt 1; Seite 4, Zeile 19 - Seite 5, Zeile 20 *<br>--- | 1,2,4,9,10,16,18 | |
| A | US-A-1 879 317 (B.F. KLEIN)<br>* Abbildungen 1,3; Anspruch 1; Seite 1, Zeilen 1-15,95-100 *<br>--- | 1 | |
| A | FR-A-1 046 429 (M. POENISCH)<br>* Seite 1, Spalte 1, Abbildung 1; Zusammenfassung Absatz Punkt 1; Abbildung 1 *<br>--- | 1,2 | |
| A | US-A-3 154 137 (F.W. GREER)<br>* Abbildung 2 *<br>--- | 1,5 | **RECHERCHIERTE SACHGEBIETE (Int. Cl.5)**<br><br>A 23 G<br>B 67 D |
| A | FR-A-2 189 798 (JET SPRAY COOLER)<br>* Abbildung 1; Ansprüche 1,6 *<br>--- | 1 | |
| A | GB-A- 945 906 (GASKELL & CHAMBERS)<br>* Abbildung 1; Seite 1, Zeilen 9-30 *<br>--- | 1 | |
| A | FR-A-1 079 483 (E. VAYDA)<br>* Seite 2, Spalte 1; Abbildung 8; Zusammenfassung Punkt 6; Abbildungen 1-5 *<br>---       -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 04-10-1990 | GUYON R.H. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 915 341 (M.S. BROWN) * Abbildungen 1,2; Spalte 1, Zeilen 4-6 * | 1 | |
| | --- | | |
| A | FR-A-1 088 024 (E. VAYDA) | | |
| | --- | | |
| A | US-A-2 675 145 (W.H. JACOBS) | | |
| | --- | | |
| A | US-A-1 859 566 (J.G. KONIKOW) | | |
| | ----- | | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 04-10-1990 | GUYON R.H. |

EPO FORM 1503 03.82 (P0403)